# EUROPÄISCHE PATENTSCHRIFT

(11) **EP 0 922 320 B1**
(45) Veröffentlichungstag und Bekanntmachung des Hinweises auf die Patenterteilung: **24.04.2002**
(21) Anmeldenummer: 98934850.3
(22) Anmeldetag: 03.06.1998
(51) Int. Cl.: H02G 3/20, F21V 21/02

(54) **VERBINDUNGSVORRICHTUNG**
CONNECTING DEVICE
DISPOSITIF DE RACCORDEMENT

(30) Priorität: 03.06.1997 WO PCT/EP97/02883; 18.11.1997 DE 19751112
(43) Veröffentlichungstag der Anmeldung: 16.06.1999
(73) Patentinhaber: Plattner, Fritz, 85598 Baldham (DE)
(72) Erfinder: Plattner, Fritz, 85598 Baldham (DE)
(74) Vertreter: Fritzsche, Thomas M., Dr.
(86) Internationale Anmeldenummer: DE9801502
(87) Internationale Veröffentlichungsnummer: WO9856093

(56) Entgegenhaltungen:
- EP-A- 0 189 758
- DE-A- 2 624 181
- DE-A- 2 730 859
- DE-A- 3 726 543

## Beschreibung

Die vorliegende Erfindung betrifft eine Vorrichtung zum Verbinden einer zu einem Verbraucher führenden Leitung mit einem elektrischen Anschluß.

Elektrische Verbraucher, wie beispielsweise Deckenlampen, weisen üblicherweise eine Zuleitung auf, die mit einem an der Decke vorgesehenen elektrischen Anschluß verbunden wird. Dieser elektrische Anschluß weist mehrere freiliegende Drähte auf, an denen jeweils verschiedene Phasen des elektrischen Stroms anliegen und die mittels Schraubverbindern oder Klemmverbindern mit entsprechenden Drähten der Lampenzuleitung verbunden werden. Zur Montage beispielsweise einer Deckenlampe wird diese entweder direkt an der Decke befestigt und anschließend die Zuleitung mit dem elektrischen Anschluß verbunden, oder die Lampe wird mittels einem an der elektrischen Zuleitung befindlichen Halter an einem an der Decke befindlichen Haken eingehängt, bevor die Zuleitung mit dem elektrischen Anschluß in der beschriebenen Weise verbunden wird. Zum Verbinden der Zuleitung mit dem elektrischen Anschluß sind sowohl bei Verwendung eines Schraubverbinders als auch bei Verwendung eines Klemmverbinders beide Hände erforderlich, so daß der Monteur in diesem Augenblick freihändig auf der Spitze der Leiter steht und leicht das Gleichgewicht verlieren kann, so daß hier ein hohes Unfallrisiko vorliegt. Zudem muß er beim Verbinden der einzelnen Drähte auf deren richtige Zuordnung achten, so daß seine Konzentration hierauf und nicht auf seinen sicheren Stand auf der Leiter gerichtet ist, so daß hier die Gefahr des Gleichgewichtsverlustes und infolge das Unfallrisiko weiter gesteigert wird. Weiterhin besteht hier die Gefahr, daß der Monteur beim Anschluß der Deckenlampe mit den freiliegenden Drähten des elektrischen Anschlusses in Berührung kommt, was bei einer versehentlich nicht ausgeschalteten Sicherung zum einen zu einem Kurzschluß führen kann, und viel gravierender zum anderen zu einer schweren Verletzung des Monteurs bis hin zu dessen Tode führen kann. Diese Gefahr besteht aber nicht nur beim Anschließen einer Deckenlampe, sondern allgemein bei freiliegenden Drähten des elektrischen Anschlusses, wenn beispielsweise in Neubauten beim Hantieren mit Leitern oder Eisenrohren die Anschlußdrähte berührt werden. Ferner können die Kontakte der freiliegenden Leitungen bei Renovierungsarbeiten versehentlich überstrichen werden, was durch späterer Nacharbeit ebenfalls zu einer potentiellen Gefahrenquelle führt.

Ebenso können die Anschlußdrähte durch eine infolge eines Unfalls herabgerissene Deckenlampe freiliegen und das beschriebene Risiko bieten, wobei die Deckenlampe aber auch nur aus der Halterung herausgerissen werden kann und im übrigen noch mit dem elektrischen Anschluß verbunden ist, so daß bei einer Berührung der möglicherweise zerstörten Deckenlampe ein elektrischer Schlag mit den beschriebenen Verletzungsfolgen möglich ist.

Es sind bereits Vorrichtungen zum Verbinden elektrischer Verbraucher mit einem Anschluß bekannt. So ist beispielsweise in der EP-A 0,254,226 eine Stecker- und Dosenkombination für den Anschluß elektrischer Lampen und Geräte beschrieben, bei der ein Steckerteil mit auf einem Kreis angeordneten messerartig und in axialer Richtung hervorstehenden Kontakten in entsprechende U-förmige Kontakte einer Dose durch Verdrehen des Steckers einschiebbar ist, wobei hierbei eine belastbare Bajonett-Verbindung zwischen Dose und Stecker ausgebildet wird.

Des weiteren ist aus der DE-A-37 26 543 eine Deckenanschlußdose für abgehängte Pendelleuchten bekannt, wobei der Anschluß mittels eines unverwechselbaren Steckers erfolgt, der in eine in die Decke integrierte Steckdose mit drei Kontakten gesteckt wird. Als Abschluß der Dose dient eine aufgeschraubte Kappe mit Bajonettverschluß.

In der DE-A-26 24 181 ist eine Lampenaufhängung mit Steckanschluß beschrieben, bei dem an einer mit einem Einschraubhaken und einer Steckdose versehenen Grundplatte eine mit einer Öse und einem Steckelement versehene Lampenhalterung eingehängt wird.

Aus der DE-A-27 30 859 ist eine Vorrichtung zum Aufhängen von Wand- oder Deckenleuchten mit den im Oberbegriff des Patentanspruchs 1 genannten Merkmalen bekannt.

Alle diese Vorrichtungen haben jedoch den Nachteil, daß es bei ihnen möglich ist, einen elektrischen Kontakt herzustellen, ehe die Montage der Lampe abgeschlossen ist. Darüberhinaus sind die Haltevorrichtungen oft relativ unhandlich und können sich bei unordentlichem Verschließen lösen, wodurch die Lampen herunterfallen können.

Vor diesem Hintergrund ist es daher Aufgabe der vorliegenden Erfindung, eine Vorrichtung zum Verbinden einer zu einem Verbraucher führenden Leitung mit einem elektrischen Anschluß zur Verfügung zu stellen, die einfach und schnell zu montieren ist und die einen sicheren Anschluß bzw. eine sichere Befestigung des Verbrauchers ermöglicht. Dabei soll beim Anschließen des Verbrauchers eine Vertauschung der Anschlußdrähte vermieden werden und bei demontiertem Verbraucher eine Berührung oder die Beschädigung freiliegender Anschlußdrähte ausgeschlossen sein.

Schließlich soll es die Vorrichtung auch unqualifizierten Personen ermöglichen, angeschlossene elektrische Verbraucher, wie z.B. Deckenlampen, selbst zu entfernen und wieder zu befestigen.

Gelöst wird diese Aufgabe durch eine Vorrichtung, wie sie im Patentanspruch 1 beschrieben ist. Vorteilhafte Ausgestaltungen der erfindungsgemäßen Vorrichtung sind in den Unteransprüchen angeführt.

Damit wird erfindungsgemäß eine Vorrichtung zur Verfügung gestellt, mit der einfach und schnell insbesondere Deckenlampen montiert werden können, ohne daß der Benutzer Bedenken vor diesem Vorgang haben muß. Dazu wird zunächst das Basisteil an der Decke befestigt, nachdem die Steckdose mit den Anschlußdrähten der elektrischen Versorgungsleitung bzw. Anschlusses verbunden wurde. Anschließend wird die Deckenlampe vorzugsweise mit ihrer Zuleitung in die in der Ausnehmung angeordnete Haltevorrichtung eingeführt, so daß sie von dem Basisteil an der Decke gehalten wird, wenn die Haltevorrichtung beispielsweise integral mit dem Basisteil als bekannte Umlenkklemme ausgebildet ist. Abschließend wird dann der an dem Leitungsende befindliche Stecker in die Steckdose eingefügt, wobei er in einer bevorzugten Ausführungsform die Zuführöffnung zur Ausnehmung für die Haltevorrichtung abdeckt, so daß der von der Haltevorrichtung gehaltene Verbraucher gleichzeitig durch den Stecker am Basisteil fixiert ist. Eine Entfernung der Zuleitung der Deckenlampe aus der Haltevorrichtung, und damit aus dem Basisteil, ist nur nach einer vorherigen Entfernung des Steckers möglich. Vorzugsweise sind Stecker und/oder Steckdose so ausgestaltet, daß sie sämtliche elektrische Leitungen, d. h. auch den Nulleiter mit einem einzigen Steckvorgang verbinden.

Obgleich eine integrale Ausbildung der Haltevorrichtung mit dem Basisteil sicherlich viele Vorteile insbesondere im Hinblick auf die Anzahl der Einzelteile bietet, ist eine Ausbildung der Haltevorrichtung als separates Bauteil dennoch vorteilhafter. Auf diese Weise ist es möglich, unterschiedliche Lampentypen mittels unterschiedlicher Haltevorrichtungen in das gleiche Basisteil aufzunehmen. Daher ist gemäß einer bevorzugten Ausführungsform die Haltevorrichtung als separates, an der Leitung oder am Verbraucher selbst anordbares Bauteil ausgebildet. Zweckmäßigerweise ist die Haltevorrichtung separat vom Stecker ausgebildet. In einer bevorzugten Ausführungsform weist die Haltevorrichtung keine stromführenden Elemente auf, um einen direkten elektrischen Kontakt auf die Lampe während des Einhängens zu vermeiden. Es ist jedoch auch möglich, die Haltevorrichtung und den Stecker fest miteinander zu verbinden, so daß bereits beim Einführen der Haltevorrichtung in das Basisteil der elektrische Kontakt gebildet wird. In diesem Fall sind Stecker und Haltevorrichtung vorzugsweise einstückig ausgebildet.

Durch diese bevorzugte Ausbildung wird insbesondere die Montage einer Deckenlampe weiter vereinfacht, da diese zunächst vom Monteur am Boden an der Haltevorrichtung befestigt werden kann, bevor der Monteur auf die Leiter steigt und die Haltevorrichtung in die Ausnehmung des Basisteils einfügt, so daß die Deckenlampe am Basisteil gehalten wird. Dieses kann er mit einer Hand machen, so daß er die andere Hand zur Wahrung des Gleichgewichts immer an der Leiter halten kann. Damit wird das Unfallrisiko erheblich reduziert.

Die Deckenlampe kann hierbei an die Haltevorrichtung angeschraubt werden, beispielsweise direkt oder mittels einer zwischengeschalteten Rohrverschraubung. Ebenso kann die Deckenlampe auch mittels ihrer Zuleitung in der Haltevorrichtung befestigt werden, die hierzu vorteilhafterweise als Umlenkklemme ausgebildet ist, beispielsweise als plattenförmiges Element mit zwei beabstandeten Durchgangsbohrungen.

Die Haltevorrichtung wird vorzugsweise mittels eines Riegels im Basisteil fixiert, wobei dieser Riegel insbesondere parallel zur Deckenfläche bzw. Wand bzw. senkrecht zur Einführrichtung der Haltevorrichtung angebracht wird. In einer besonders bevorzugten erfindungsgemäßen Ausführung ist der Riegel als Stecker ausgebildet.

Nach dem Einfügen der Haltevorrichtung in die entsprechende Ausnehmung im Basisteil wird die Haltevorrichtung und damit die Deckenlampe durch Einfügen des Steckers in die Steckdose am Basisteil fixiert. Erst mit Einfügen des Steckers, d. h. mit dem Verriegeln der Haltevorrichtung bzw. mit dem letzten Arbeitsvorgang bei der Montage eines elektronischen Verbrauchers, werden die elektrischen Kontakte geschlossen. Die Fixierung ergibt sich hierbei durch die Abdeckung der Zuführöffnung zur Ausnehmung für die Haltevorrichtung durch den Stecker. Dabei ist hier mit dem Begriff "Zuführöffnung" sowohl die Öffnung der Ausnehmung im Basisteil, welche die Haltevorrichtung aufnimmt, umfaßt, als auch die bei integral mit dem Basisteil ausgebildeter Haltevorrichtung vorgesehenen Öffnungen zur Aufnahme insbesondere der Zuleitung der Deckenlampe.

Das Einfügen des Steckers in die Steckdose kann dabei ebenfalls mit einer Hand erfolgen, so daß die Unfallgefahr weiter minimiert wird, nicht zuletzt auch durch die Tatsache, daß dieser einfache Anschlußvorgang schnell möglich ist und somit der Monteur nur geringe Zeit auf der Leiter verbringt. Da zweckmäßigerweise die Steckdose so ausgestaltet ist, daß sie keine freiliegenden, berührbaren elektrischen Kontakte aufweist, wird erst bei vollständigem Einschieben des Steckers in die Dose eine elektrisch leitende Verbindung zum Verbraucher hergestellt. Dadurch wird ausgeschlossen, daß der Monteur beim Anschließen der Lampe bzw. des Verbrauchers versehentlich mit Kontakten oder Kabeln in Berührung kommt, die unter Spannung stehen. Somit muß der Monteur nicht mehr auf den Schaltzustand der entsprechenden Sicherung achten, beziehungsweise darauf, daß die entsprechenden Leitungen spannungsfrei geführt sind.

Eine Demontage der Deckenlampe durch Herausnehmen der Haltevorrichtung aus dem Basisteil ist nur nach einer Entfernung des Steckers aus der Steckdose möglich, wodurch gleichzeitig die elektrische Verbindung der Deckenlampe mit dem elektrischen Anschluß unterbrochen wird. Damit wird jedoch auch beispielsweise bei einem Abreißen der Lampe infolge eines Unfalles erst die elektrische Verbindung der Deckenlampe mit dem elektrischen Anschluß unterbrochen, bevor sich die Deckenlampe von dem Basisteil lösen kann. Somit besteht dann auch bei einer möglicherweise zerstörten Lampe keine Verletzungsgefahr durch Berühren freiliegender Leitungen. Zudem weist das Basisteil weder bei einer abgerissenen Deckenlampe noch bei einer ordnungsgemäß demontierten Deckenlampe freiliegende Anschlußdrähte auf, so daß auch hier die Gefahr einer unbeabsichtigten Berührung möglicherweise unter Strom stehender Anschlußdrähte beseitigt ist. Muß jedoch das Basisteil aufgrund einer unsachgemäßen Behandlung ausgewechselt werden, ist eine Annäherung mit einem der elektrischen Kontakte weiterhin ausgeschlossen.

Die Steckdose ist vorzugsweise im Basisteil angeordnet. Obgleich die Steckdose integral mit dem Basisteil ausgebildet sein kann, ist sie vorteilhafterweise als separates, in eine Ausnehmung des Basisteils einfügbares Bauteil ausgebildet, wobei die Steckdose und die Ausnehmung vorzugsweise so ausgebildet sind, daß die Steckdose nur in einer bestimmten Lage in die Ausnehmung einfügbar ist. Vorzugsweise ist die Steckdose von derjenigen Seite in das Basisteil einfügbar, die an der Wand bzw. Decke befestigt wird, d. h. daß die Steckdose nur in das nicht an der Wand bzw. Decke befestigte Basisteil einbaubar ist. Auf diese Weise kann die Steckdose auch nicht vom Basisteil im montierten Zustand gelöst werden, was ebenfalls zur Sicherheit der gesamten Vorrichtung dient. Damit wird zum einen die Montage der Vorrichtung weiter vereinfacht, da zunächst die leicht zu handhabende, als einfaches Bauteil ausgebildete Steckdose an die Anschlußdrähte des elektrischen Anschlusses angeschlossen wird, bevor sie in die Ausnehmung im Basisteil eingefügt wird und dann an der Decke oder der Wand befestigt wird. Zum anderen ist durch die vorgegebene Einführlage der Steckdose ihre Position und damit auch die Position ihrer Anschlußkontakte im Basisteil definiert, so daß eine sichere und zuverlässige Verbindung ohne eine Vertauschung der Phasen beim Einfügen des Steckers möglich ist. Dieses erhöht. wesentlich die Betriebssicherheit der erfindungsgemäßen Vorrichtung, ebenso wie die vorteilhafte Ausbildung, nach der die Steckdose bei an der Wand oder an der Decke angebrachtem Basisteil in der Ausnehmung fixiert ist. Damit wird die Steckdose sicher und zuverlässig im Basisteil gehalten, auch wenn der Stecker beispielsweise zu einem beabsichtigten Austausch der Deckenlampe herausgezogen oder infolge eines Unfalles mit größerer Gewalt herausgerissen wird. In jedem Fall wird bei einer Entfernung des Steckers vom Basisteil die elektrische Verbindung unterbrochen und damit die Gefahr von Kurzschlüssen und möglicherweise gefährlichen Verletzungen vermieden.

Zur Erhöhung der Betriebssicherheit trägt auch bei, wenn gemäß einer weiteren vorteilhaften Ausbildung der Vorrichtung der Stecker durch eine Führung im Basisteil geführt ist, wobei die Führung so ausgebildet ist, daß sie den Stecker nur in einer bestimmten Lage führt. Damit wird erreicht, daß die Verbindung des Steckers mit der Steckdose, die ebenfalls eine definierte Lage im Basisteil aufweist, nur in einer bestimmten Lage möglich ist. Auch dieses trägt zu einer Erhöhung der Betriebssicherheit bei, da dann nur die jeweils einander zugeordneten Phasen miteinander verbunden werden können.

Um zu vermeiden, daß die von der Decke oder der Wand abstehenden Anschlußdrähte des elektrischen Anschlusses nach dem Verbinden mit der im Basisteil angeordneten Steckdose freiliegen, ist vorteilhafterweise im Basisteil eine Kammer zur Aufnahme der Anschlußleitung vorgesehen. Diese weist vorzugsweise eine Abdeckung auf, so daß nach dem Anschließen der Steckdose an die Anschlußdrähte der Anschlußleitung und dem Anbringen des Basisteils an der Wand bzw. der Decke die noch freiliegenden Anschlußdrähte in die Kammer eingeführt werden können. Durch Einfügen der Abdeckung ist die Kammer dann nach außen hin verschlossen, so daß die Anschlußdrähte nicht mehr beschädigt oder unbeabsichtigt berührt werden können. Trotzdem kann durch eine vorgeprägte Aussparung an der Abdeckung eine zusätzliche Leitung, die in der Kammer mit der Versorgungsleitung verdrahtet wurde, zu einer weiteren Lampe durchgeführt werden. Auch wenn die Steckdose mit der Anschlußleitung bzw. der Stecker mit der zum Verbraucher führenden Leitung auf beliebige Weise verbunden werden kann, beispielsweise durch Löten, so ist es doch vorteilhaft, wenn diese gemäß bevorzugter Ausführungsformen durch Verschrauben oder Festklemmen verbunden sind. Damit wird die Montage weiter vereinfacht und schneller möglich und somit nachfolgend auch das Unfallrisiko weiter minimiert.

Mit dieser oben ausführlich beschriebenen, erfindungsgemäßen Vorrichtung wird eine sichere, zuverlässige und einfache elektrische und mechanische Verbindung einer zu einem Verbraucher führenden Leitung mit einem elektrischen Anschluß möglich. Insbesondere bei Deckenlampen ist deren schneller und einfacher Austausch auch durch unqualifiziertes Personal möglich, was beispielsweise für Messen, Ausstellungen und Verkaufsräume, aber auch für private Haushalte von Vorteil ist. Zum Austausch muß hier lediglich der Stecker, welcher die Haltevorrichtung im Basisteil fixiert, aus der Steckdose gezogen werden, so daß die Haltevorrichtung mit der daran angeordneten Deckenlampe aus dem Basisteil entnommen werden kann. Dieses ist mit einer Hand möglich, ebenso wie das Anschließen einer neuen Deckenlampe, so daß die zweite Hand während des gesamten Vorganges an der Leiter gehalten werden kann und damit das Unfallrisiko erheblich minimiert wird. Weiterhin wird vor einem Lösen der Deckenlampe deren elektrische Verbindung zum elektrischen Anschluß zwangsläufig unterbrochen, so daß auch in dieser Hinsicht insbesondere im Hinblick auf ein unbeabsichtigtes Herabreißen der Deckenlampe die Sicherheit deutlich erhöht ist. Auch ist eine einfache und schnelle Montage durch Zusammenstecken der einzelnen Bauteile möglich, wobei diese aufgrund ihrer jeweiligen Ausbildung nur in einer vorbestimmten Lage zusammengesteckt werden können, so daß das Vertauschen von Teilen oder das Verwechseln von Anschlüssen ausgeschlossen ist. Schließlich liegen auch bei demontierter Deckenlampe keine möglicherweise unter Strom stehenden Anschlußdrähte frei, so daß die Kurzschlußgefahr bzw. Verletzungsgefahr durch unbeabsichtigtes Berühren dieser Anschlußdrähte ebenfalls beseitigt ist.

Die Erfindung wird nachfolgend anhand eines bevorzugten Ausführungsbeispieles unter Bezugnahme auf die beigefügten Zeichnungen näher erläutert. Dabei zeigt:
Fig. 1 eine Ansicht des Basisteils mit eingefügter Steckdose,
Fig. 2 eine Ansicht des Steckers,
Fig. 3 eine Ansicht der Haltevorrichtung und
Fig. 4 eine Ansicht der Steckdose.

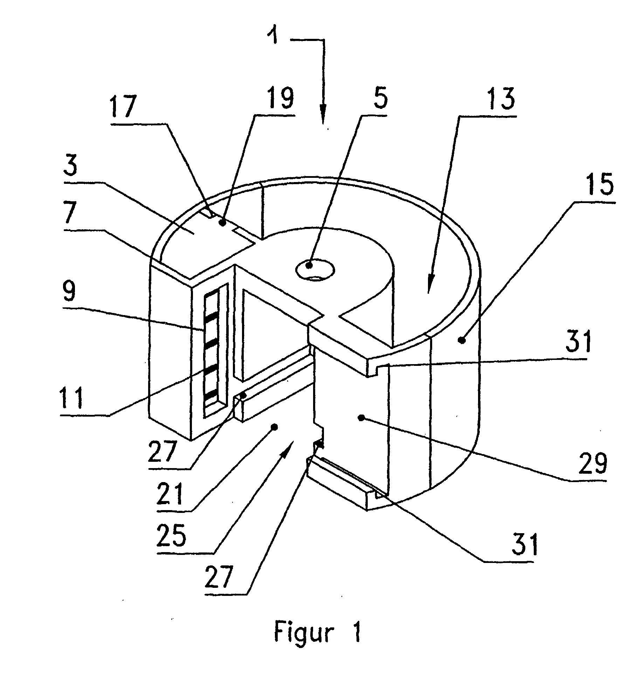

In Fig. 1 ist ein Basisteil 1 mit einer eingefügten Steckdose 3 in einer perspektivischen Ansicht dargestellt. Das Basisteil 1 weist einen im wesentlichen runden Grundriß auf und ist im wesentlichen dosenförmig ausgebildet. In seinem Zentrum weist es eine Befestigungsöffnung 5 auf, mit der es beispielsweise durch Verschrauben an einer Decke befestigt werden kann. Zur Aufnahme der Steckdose 3 weist das Basisteil 1 eine nach oben offene Ausnehmung 7 auf, die wiederum eine zur Seite gerichtete Öffnung 9 aufweist, damit die Kontaktöffnungen 11 der Steckdose 3 zugänglich sind. Weiterhin weist das Basisteil 1 eine Kammer 13 zur Aufnahme der nicht dargestellten Anschlußleitungen bzw. -kabel auf, die nach oben hin offen ist, um das aus der Decke herausragende Anschlußkabel aufnehmen zu können. Zur Seite hin ist die Kammer 13 mittels einer abnehmbaren Abdeckung 15 verschlossen, so daß die Kammer 13 und damit das dort befindliche Anschlußkabel auch bei an der Decke montiertem Basisteil 1 zugänglich ist. Die Kammer 13 ist weiterhin über eine Öffnung 17 mit der Ausnehmung 7 verbunden, wobei bei in die Ausnehmung 7 eingefügter Steckdose 3 die Steckdose 3 mit einem Verbindungssteg 19 in der Öffnung 17 angeordnet ist. Der Verbindungssteg 19 der Steckdose 3 weist dabei hier nicht dargestellte Anschlüsse auf, in die die ebenfalls nicht dargestellten Anschlußdrähte zur Herstellung einer elektrischen Verbindung eingefügt werden.

Weiterhin weist das Basisteil 1 eine zentral angeordnete Ausnehmung 21 auf, die nach unten und zur Seite hin offen ist und zur Aufnahme der Haltevorrichtung 23 ausgebildet ist. Die seitliche Öffnung ist dabei als Zuführöffnung 25 ausgebildet. Hierzu weist die Ausnehmung 21 zwei seitlich angeordnete Führungsnuten 27 auf, die zur Führung und Aufnahme der nachfolgend beschriebenen Haltevorrichtung 23 dienen und zur Zuführöffnung 25 hin offen sind. Neben der Zuführöffnung 25 der Ausnehmung 21 ist auf einer Seite eine Führungsfläche 29 mit Führungsnuten 31 angeordnet, und auf der anderen Seite die Öffnung 9 mit den Kontaktöffnungen 11 der Steckdose 3.

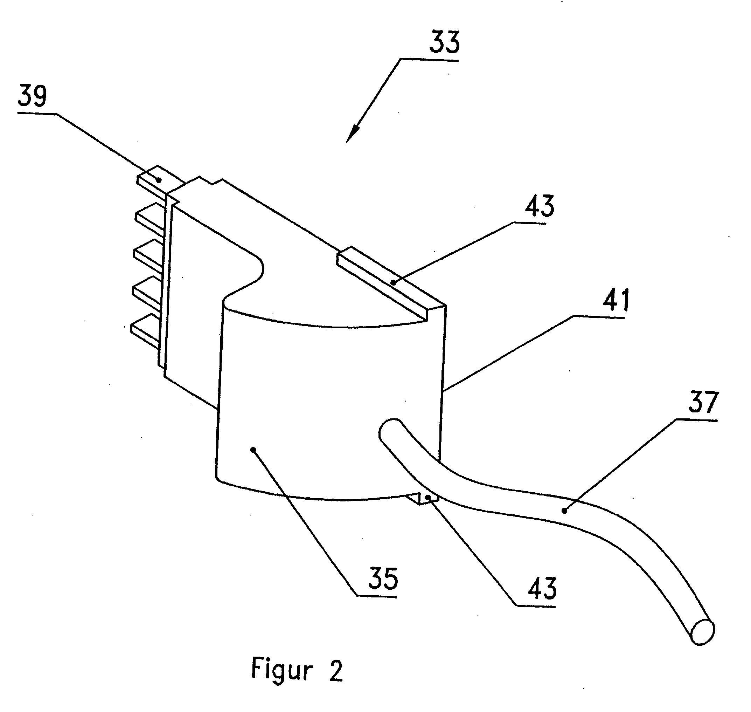

Die Führungsfläche 29 mit den Führungsnuten 31 dient zur Aufnahme und Führung eines Steckers 33, der in Fig. 2 dargestellt ist. Der Stecker 33 weist einen Steckerkörper 35 auf, der über eine Leitung 37 mit einer nicht dargestellten Deckenlampe verbunden ist. An einem Ende weist der Steckerkörper 35 Anschlußkontakte 39 auf, die so ausgebildet und angeordnet sind, daß sie in die Kontaktöffnungen 11 der Steckdose 3 einfügbar sind. Seitlich hierzu ist eine Führungsfläche 41 am Steckerkörper 35 ausgebildet, die mit der am Basisteil ausgebildeten Führungsfläche 29 zusammenwirkt. Am oberen und unteren Rand dieser Führungsfläche 41 ist jeweils ein Führungssteg 43 ausgebildet, die wiederum so angeordnet und ausgebildet sind, daß sie mit den Führungsnuten 31 am Basisteil 1 zusammenwirken.

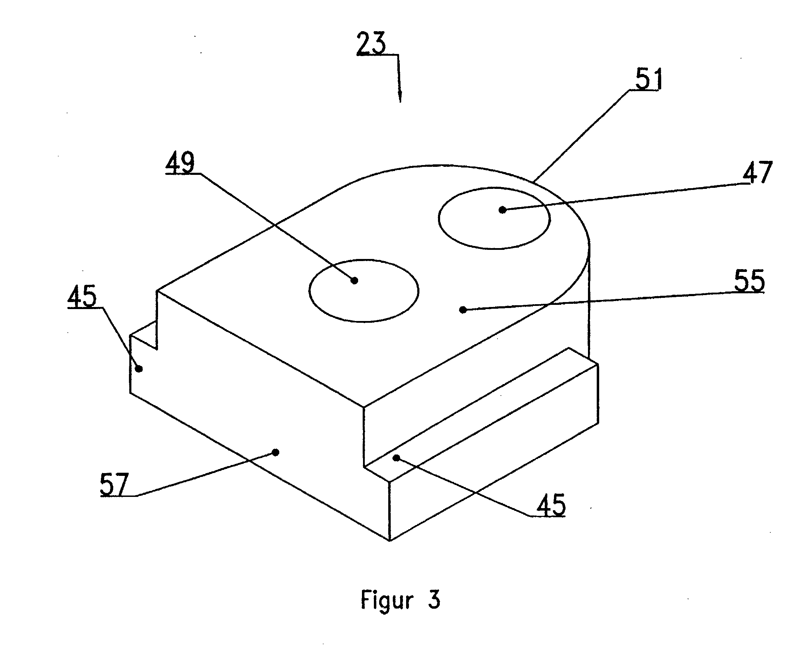

In Fig. 3 ist die Haltevorrichtung 23 in einer perspektivischen Ansicht dargestellt. Die Haltevorrichtung 23 ist im wesentlichen plattenförmig ausgebildet und weist zwei Haltewulste 45 auf, die jeweils an gegenüberliegenden Seiten der Haltevorrichtung 23 ausgebildet sind. Weiterhin weist sie ein Führungsloch 47 sowie ein Führungsloch 49 auf, die jeweils durch die plattenförmige Haltevorrichtung 23 hindurchgehen. Eine zwischen den beiden Haltewulsten 45 angeordnete Seite 51 der Haltevorrichtung 23 ist der Form der Ausnehmung 21 im Basisteil 1 angepaßt, so daß sie im hier dargestellten Ausführungsbeispiel von oben betrachtet halbkreisförmig ausgebildet ist.

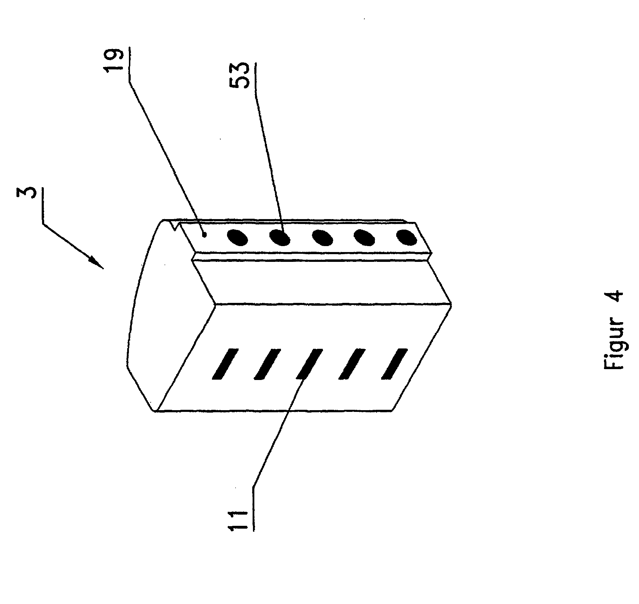

In Fig. 4 ist schließlich die Steckdose 3 in einer perspektivischen Ansicht dargestellt. Die Steckdose 3 ist in ihrer äußeren Form der Ausnehmung 7 im Basisteil angepaßt und weist einen Verbindungssteg 19 auf. Der Verbindungssteg 19 wiederum weist Anschlüsse 53 auf, in welche die Anschlußdrähte der nicht dargestellten elektrischen Anschlußleitung eingefügt werden. Weiterhin weist die Steckdose 3 Kontaktöffnungen 11 auf, in welche die Anschlußkontakte 39 des Steckers 33 eingefügt werden. Die Anschlußkontakte sind vorzugsweise asymmetrisch ausgebildet, so daß ein falsches Zusammenstecken nicht möglich ist. Zweckmäßigerweise ist der Nulleiter in einer besonderen Form oder Lage ausgestaltet, um einen Kurzschluß beim Zusammenstecken zu vermeiden. Bei in die Ausnehmung 7 eingefügter Steckdose 3 sind die Kontaktöffnungen 11 durch die Öffnung 9 im Basisteil 1 zugänglich und der Verbindungssteg 19 ist in der Öffnung 17 angeordnet, so daß die Anschlüsse 53 von der Kammer 13 her zugänglich sind. Durch die besondere, der Ausnehmung 7 im Basisteil 1 angepaßte Ausgestaltung der Steckdose 3, ist diese nur in einer vorgegebenen Lage in die Ausnehmung 7 einfügbar, zudem schließt sie bündig mit der Oberseite des Basisteiles 1 ab, wie insbesondere der Fig. 1 zu entnehmen ist.

Nachfolgend wird nun die Funktion des dargestellten Ausführungsbeispieles ausführlich beschrieben. Die in Fig. 3 dargestellte Haltevorrichtung dient zur Befestigung einer nicht dargestellten Deckenlampe am Basisteil 1. Hierzu wird die Haltevorrichtung 23 zunächst an der Leitung der nicht dargestellten Deckenlampe befestigt, indem die Leitung beispielsweise zuerst durch die Führungsöffnung 47 nach oben durchgeführt wird und dann umgelegt und durch die Führungsöffnung 49 wieder nach unten zurückgeführt wird. Die über dem zwischen den Führungslöchern 47 bzw. 49 ausgebildeten Steg 55 umgelenkte Leitung fixiert auf diese Weise die Haltevorrichtung 23 nach Art einer Umlenkklemme, so daß die an der Leitung angeordnete Deckenlampe nunmehr mittels der Haltevorrichtung 23 im Basisteil 1 befestigt werden kann.

Hierzu wird nun die Haltevorrichtung 23, an welcher die Deckenlampe mittels deren Leitung in der beschriebenen Weise befestigt ist, mit ihrer der Ausnehmung 21 im Basisteil 1 angepaßten Seite 51 von der Seite bzw. der Zuführöffnung 25 her in die Ausnehmung 21 eingeführt. Dabei werden die jeweils an den gegenüberliegenden Seiten der Haltevorrichtung 23 ausgebildeten Haltewulste 45 in die Führungsnuten 31 der Ausnehmung 21 eingeführt und durch diese geführt und gehalten. Die Haltevorrichtung 23 wird dabei soweit in die Ausnehmung 21 eingeschoben, bis sie vollständig in dieser aufgenommen ist, d. h. bis die Endfläche 57 der Haltevorrichtung 23 bündig mit der seitlich neben der Ausnehmung 21 angeordneten Führungsfläche 29 des Basisteils 1 abschließt.

Die Deckenlampe wird nun durch die Haltevorrichtung 23 im Basisteil 1 gehalten und nachfolgend im nächsten Schritt durch Einfügen des Steckers 33 auch sicher und zuverlässig im Basisteil 1 fixiert. Hierzu wird der Stecker 33 mit seiner Führungsfläche 41 auf die am Basisteil 1 seitlich neben der Ausnehmung 21 ausgebildete Führungsfläche 29 aufgesetzt und in Richtung auf die Steckdose 3 hin verschoben, wobei die an der Spitze des Steckers 33 ausgebildeten Anschlußkontakte 39 in diese Richtung weisen. Hierbei gelangen die am Stecker 33 ausgebildeten Führungsstege 43 in die entsprechend ausgebildeten Führungsnuten 31, die seitlich der Führungsfläche 29 ausgebildet sind. Die Führungsnuten 31 führen dabei zum einen den Stecker 33 beim Verschieben in Richtung auf die Steckdose 3, zum anderen halten sie ihn sicher und fest am Basisteil 1, wenn er seine Endstellung erreicht hat. Die Endstellung hat der Stecker 33 erreicht, wenn er mit seinen Anschlußkontakten 39 vollständig in die Kontaktöffnung 11 der Steckdose 3 eingefügt ist, wodurch die elektrische Verbindung zur Deckenlampe hergestellt wird.

In dieser Endstellung deckt der Stecker 33 die seitliche Zuführöffnung 25 der Ausnehmung 21 mit seiner Führungsfläche 41 ab. Da die Haltevorrichtung 23 nach unten hin durch ihre Haltewulste 45 in den Führungsnuten 27 der Ausnehmung 21 gehalten wird, kann sie nun nicht mehr aus der Ausnehmung entfernt werden. Bei einer seitlichen Bewegung in Richtung auf den Stecker 33 hin würde die Haltevorrichtung 23 mit ihrer Endfläche 57 gegen die Führungsfläche 41 des Stekkers 33 stoßen und an einer weiteren Bewegung in diese Richtung gehindert. Sollte die Haltevorrichtung 23 dennoch zwangsweise weiter in Richtung auf den Stecker 33 hin bewegt werden, so würde sie den Stecker 33 aus den Führungsnuten 31 und nachfolgend aus den Kontaktöffnungen 11 der Steckdose 3 herausdrücken, so daß die elektrische Verbindung zur Deckenleuchte unterbrochen wäre, bevor die Haltevorrichtung 23 die Ausnehmung 21 im Basisteil 1 verlassen könnte.

Damit wird die Kurzschluß- und Verletzungsgefahr bei einer infolge eines Unfalls herabgerissenen Deckenlampe deutlich reduziert, zumal dann auch keine freiliegenden und unter Strom stehenden Kontakte am Basisteil 1 zurückbleiben. Die Kontaktöffnungen 11 der Steckdose 3 sind sowohl in diesem Fall als auch bei einer ordnungsgemäß demontierten Dekkenlampe nicht von außen zugänglich, da die Steckdose 3 sicher und zuverlässig in der Ausnehmung 7 im Basisteil 1 gehalten wird, aus der die Steckdose 3 nur nach oben hin entfernt werden kann. Da das Basisteil 1 jedoch mittels der Befestigungsöffnung 5 an der Decke befestigt ist, kann die Steckdose 3 auf keinen Fall aus der Ausnehmung 7 herausgezogen oder herausgerissen werden.

Es wird insgesamt somit eine sehr sichere und zuverlässige Vorrichtung zum Verbinden einer zu einem Verbraucher führenden Leitung mit einem elektrischen Anschluß zur Verfügung gestellt, die zudem einfach und schnell zu montieren ist und eine hohe Betriebssicherheit aufweist. Weiterhin ist mit dieser Vorrichtung ein schneller und problemloser Wechsel des Verbrauchers möglich, wobei wegen der nur mit einer Hand möglichen Herstellung und Trennung der Verbindung die hierbei auftretenden Gefahren minimiert werden.

### Bezugszeichenliste

- 1: Basisteil
- 17: Öffnung
- 7: Ausnehmung
- 9: Öffnung
- 21: Ausnehmung
- 19: Verbindungssteg
- 5: Befestigungsöffnung
- 13: Kammer
- 15: Abdeckung
- 29: Führungsfläche
- 31: Führungsnut
- 27: Führungsnut
- 3: Steckdose
- 11: Kontaktöffnung
- 33: Stecker
- 35: Steckerkörper
- 39: Anschlußkontakte
- 43: Führungssteg
- 41: Führungsfläche
- 37: Leitung
- 23: Haltevorrichtung
- 45: Haltewulst
- 47: Führungsloch
- 49: Führungsloch
- 55: Steg
- 51: Seite
- 57: Endfläche
- 25: Zuführöffnung
- 53: Anschluß

## Patentansprüche

1. Vorrichtung zum Verbinden einer zu einem Verbraucher führenden Leitung (37) mit einem elektrischen Anschluß, mit
einem an einer Wand oder Decke anbringbaren Basisteil (1) ;
einer Haltevorrichtung (23) zum Halten des Verbrauchers;
einer mit dem elektrischen Anschluß verbindbaren Steckdose (3); und mit
einem an der Leitung (37) angeordneten, in die Steckdose (3) einfügbaren Stecker (33);
wobei das Basisteil (1) eine Ausnehmung (21) zur Aufnahme der Haltevorrichtung (23) aufweist,
**dadurch gekennzeichnet, daß** der Stecker (33) als Riegel ausgebildet ist, der in dem in die Steckdose (3) eingeführten Zustand die Haltevorrichtung (23) in der Ausnehmung (21) am Basisteil (1) fixiert.

2. Vorrichtung nach Anspruch 1, **dadurch gekennzeichnet, daß** der in die Steckdose (3) eingefügte Stekker (33) die Ausnehmung (21) zumindest teilweise so verschließt, daß der Verbraucher am Basisteil (1) fixiert ist.

3. Vorrichtung nach einem der vorangehenden Ansprüche, **dadurch gekennzeichnet, daß** die Haltevorrichtung (23) als separates, an der Leitung (37) oder am Verbraucher anordbares Bauteil ausgebildet ist.

4. Vorrichtung nach einem der vorangehenden Ansprüche, **dadurch gekennzeichnet, daß** die Steckdose (3) als separates, in eine Ausnehmung (7) des Basisteils (1) einfügbares Bauteil ausgebildet ist.

5. Vorrichtung nach Anspruch 4, **dadurch gekennzeichnet, daß** die Steckdose (3) und die Ausnehmung (7) so ausgebildet sind, daß die Steckdose (3) nur in einer bestimmten Lage in die Ausnehmung (7) einfügbar ist.

6. Vorrichtung nach Anspruch 4 oder 5, **dadurch gekennzeichnet, daß** die Steckdose (3) bei an der Wand oder Decke angebrachtem Basisteil (1) in der Ausnehmung (7) fixiert ist.

7. Vorrichtung nach einem der vorangehenden Ansprüche, **dadurch gekennzeichnet, daß** der Stecker (33) durch eine Führung (29, 31) im Basisteil (1) geführt ist, wobei die Führung (29, 31) so ausgebildet ist, daß sie den Stecker (33) nur in einer bestimmten Lage führt.

8. Vorrichtung nach einem der vorangehenden Ansprüche, **dadurch gekennzeichnet, daß** das Basisteil (1) eine Kammer (13) zur Aufnahme des elektrischen Anschlusses aufweist.

9. Vorrichtung nach Anspruch 8, **dadurch gekennzeichnet, daß** die Kammer (13) eine Abdeckung (15) aufweist.

10. Vorrichtung nach einem der vorangehenden Ansprüche, **dadurch gekennzeichnet, daß** der elektrische Anschluß mit der Steckdose (3) und/oder durch Verschrauben oder Festklemmen verbunden ist.

## Claims

1. A device for attaching to an electrical connection a connecting cord (37) leading to a consumer, comprising
- a base member (1) adapted to be mounted on a wall or ceiling;
- a holding means (23) for holding the consumer;
- a socket (3) adapted to be attached to the electrical connection; and further comprising
- a plug (33) mounted on the connecting cord (37) and adapted to be inserted into the socket (3);
said base member (1) having a recess (21) to receive the holding means (23), **characterized in that** the plug (33) is designed as an interlocking device which, when inserted into the socket (3), fixes the holding means (23) in the recess (21) in the base member (1).

2. A device according to claim 1, wherein the plug (33) which is inserted into the socket (3) closes the recess (21) at least to such an extent that the consumer is fixed in the base member (1).

3. A device according to any of the preceding claims, wherein the holding device (23) is designed as a separate component adapted to be mounted on the connecting cord or on the consumer.

4. A device according to any of the preceding claims, wherein the socket (3) is designed as a separate component adapted to be inserted into a recess (7) in the base member (1).

5. A device according to claim 4, wherein the socket (3) and the recess (7) are designed such that the socket (3) can be inserted into the recess (7) in one specific position only.

6. A device according to claim 4 or 5, wherein the socket (3) is fixed in the recess (7) when the base member (1) is mounted on the wall or ceiling.

7. A device according to any of the preceding claims, wherein the plug (33) is guided through a guide means (29, 31) in the base member (1), said guide means (29, 31) being designed such that it guides the plug (33) in one specific position only.

8. A device according to any of the preceding claims, wherein the base member (1) has a chamber (13) for receiving the electrical connection.

9. A device according to claim 8, wherein the chamber (13) has a covering (15).

10. A device according to any of the preceding claims, wherein the electrical connection is attached to the socket (3) and/or by screwing or clamping it.

## Revendications

1. Dispositif pour raccorder à un raccordement électrique un câble (37) conduisant vers un consommateur électrique, pourvu
- d'un élément de base (1) susceptible d'être fixé à un mur ou un plafond ;
- d'un dispositif de support (23) pour supporter le consommateur ;
- d'une prise de courant (3) susceptible d'être raccordée à un raccordement électrique ; et
- d'une fiche mâle (33) raccordée au câble (37) et susceptible d'être introduite dans la prise de courant (3) ;
l'élément de base (1) ayant une concavité (21) pour recevoir le dispositif de support (23), **caractérisé en ce que** la fiche mâle (33) est construite en forme de verrou et, introduite dans la prise de courant (3), fixe dans la concavité (21) le dispositif de support (23) à l'élément de base (1).

2. Dispositif selon la revendication 1, **caractérisé en ce que** la fiche mâle (33) introduite dans la prise de courant (3) referme au moins une partie de la concavité (21), de telle sorte que le consommateur est fixé à l'élément de base (1).

3. Dispositif selon l'une des revendications précédentes, **caractérisé en ce que** le dispositif de support (23) est construit de façon à être un élément à part pouvant être raccordé au câble (37) ou au consommateur.

4. Dispositif selon l'une des revendications précédentes, **caractérisé en ce que** la prise de courant (3) est construite de façon à être un élément à part pouvant être introduit dans une concavité (7) de l'élément de base (1).

5. Dispositif selon la revendication 4, **caractérisé en ce que** la prise de courant (3) et la concavité (7) sont construites de sorte que la prise de courant (3) ne puisse être introduite dans la concavité (7) que dans une position bien précise.

6. Dispositif selon les revendications 4 ou 5, **caractérisé en ce que** la prise de courant (3) est fixée dans la concavité (7) quand l'élément de base (1) est fixé au mur ou au plafond.

7. Dispositif selon l'une des revendications précédentes, **caractérisé en ce que** la fiche mâle (33) est conduite dans l'élément de base (1) à travers un conduit (29, 31), celui-ci étant construit de sorte qu'il ne conduise la fiche mâle (33) que dans une positon bien précise.

8. Dispositif selon l'une des revendications précédentes, **caractérisé en ce que** l'élément de base (1) est pourvu d'une chambre (13) destinée à recevoir le raccordement électrique.

9. Dispositif selon la revendication 8, **caractérisé en ce que** la chambre (13) est pourvue d'un couvercle (15).

10. Dispositif selon l'une des revendications précédentes, **caractérisé en ce que** le raccordement électrique est raccordé à la prise de courant (3) et/ou par vissage ou serrage.
